# FASCICULE DE BREVET EUROPEEN

(11) **EP 2 525 609 B1**
(45) Date de publication et mention de la délivrance du brevet: **19.03.2014**
(21) Numéro de dépôt: 12168166.2
(22) Date de dépôt: 16.05.2012
(51) Int. Cl.: H04W 48/20, H04W 84/04, H04W 28/08, H04W 48/08, H04W 84/12, H04W 52/02

(54) **Procédé et dispositif de gestion d'accès à un réseau WiFi communautaire**
Verfahren und Vorrichtung für die Verwaltung den Zugang zu einem WiFi-Netzwerk kommunitären
Method and appartus for managing access to a communitary WiFi network

(30) Priorité: 18.05.2011 FR 1154314
(43) Date de publication de la demande: 21.11.2012
(73) Titulaire: Orange, 75015 Paris (FR)
(72) Inventeur: Malledant, Matthieu, 35000 RENNES (FR); Lehr, Franck, 35250 SAINT SULPICE LA FORET (FR); Dure, Sébastien, 35200 RENNES (FR)

(56) Documents cités:
- WO-A1-2010/093297
- US-A1- 2005 147 062
- US-A1- 2009 290 561
- US-B1- 7 826 426

## Description

La présente invention se rapporte au domaine des télécommunications. Au sein de ce domaine, l'invention se rapporte plus particulièrement aux réseaux WiFi communautaire et aux passerelles domestiques comportant un point d'accès à un réseau WiFi communautaire.

Un réseau WiFi communautaire désigne un réseau d'accès qui s'appuie sur des passerelles domestiques comprenant au moins un point d'accès sans fil à un réseau WiFi communautaire, utilisant notamment la technologie de transmission sans fil basée sur la norme de réseau radioélectrique IEEE 802.11 et ses évolutions communément regroupées sous l'appellation WiFi (pour « Wireless Fidelity »). La première fonction d'une passerelle domestique est de réaliser l'interface entre les équipements privés de l'utilisateur et un réseau haut débit, le plus souvent fixe, par exemple de type ADSL. A cette fin, la passerelle comprend au moins un point d'accès WiFi au réseau domestique. Une passerelle assure des fonctions de modem et de routeur.

Un point d'accès WiFi comprend différents paramètres dont un qui permet d'identifier un réseau radio, ce paramètre est connu de l'homme du métier sous l'abréviation SSID (pour « Service Set Identifier »). En fonction des capacités de la passerelle domestique, il est possible de paramétrer plusieurs réseaux radio différents, généralement au moins huit voire seize. Chaque réseau radio se différencie par son SSID et défini un point d'accès au sens de l'invention.

Ainsi, le réseau WiFi communautaire a la particularité d'utiliser un même SSID pour toutes les passerelles domestiques intervenant dans ce réseau : SSID_Com.

En fonctionnement, une passerelle domestique diffuse régulièrement une trame balise radio pour manifester sa présence, cette trame est connue de l'homme du métier sous l'abréviation Beacon. Cette trame contient les différents SSID paramétrés pour la passerelle. Ainsi, une passerelle du réseau WiFi communautaire diffuse généralement au moins deux SSID, celui qui correspond à son réseau radio privée et celui qui correspond au réseau WiFi communautaire.

Lorsqu'une station veut établir une communication via un point d'accès WiFi, elle doit dans une première étape découvrir un tel point d'accès. Cette découverte s'effectue soit par une écoute passive en balayant la bande radio pour détecter la présence de Beacon et donc d'une passerelle avec point d'accès à proximité, soit par une recherche active en sondant les canaux de la bande radio par l'émission d'une trame « probe request ». Dans le premier cas, la station peut ultérieurement émettre une requête « probe request » adressée au point d'accès détecté en utilisant le SSID de ce point d'accès pour obtenir des informations complémentaires non diffusées dans la balise « beacon ». Le point d'accès SSID répond par une trame « probe response » en indiquant les capacités de transmission de la passerelle compte tenu en particulier du nombre d'utilisateurs déjà connectés à la passerelle. Dans le second cas, le point d'accès, s'il existe, répond par une trame « probe response ».

Dans une deuxième étape, la station et le point d'accès effectuent généralement une identification mutuelle.

Une étape d'association est ensuite nécessaire pour que la station puisse envoyer des données via le point d'accès, typiquement vers un destinataire distant.

Il s'avère toutefois qu'un nombre important de communications vers un réseau de télécommunication via des passerelles domestiques sont établies par une liaison filaire (typiquement selon le protocole Ethernet) entre la station d'origine de la communication et la passerelle. La consommation électrique du module d'accès radio de la passerelle est dans ces cas en pure perte. Compte tenu que cette consommation participe pour environ 20% à la consommation électrique totale de la passerelle, il apparaît que la mise en veille, voire l'extinction du module radio permet de faire des économies d'énergie notables à l'échelle d'un pays, voire d'une ville.

Mais, compte tenu que l'accès au réseau radio WiFi est basé sur un accès partagé nécessitant un mécanisme d'évitement de collision CSMA/CA et qu'une station peut être mobile ou peut tenter d'établir une communication à tout moment, un point d'accès WiFi communautaire doit être prêt à tout moment pour entendre toute nouvelle demande d'accès, ce qui interdit de couper son alimentation.

US 7 826 426 divulgue une synchronisation d'informations diffusées par les "beacon" des points d'accès (AP) d'un système WLAN pour aider à ce que des paquets stockés arrivent au terminal lorsqu'il se réveille.

La présente invention se place dans le contexte d'un réseau WiFi communautaire dont l'architecture comprend un serveur et une base de données des points d'accès affiliés au réseau communautaire.

La présente invention propose un procédé de gestion des accès au réseau WiFi communautaire qui permette d'assurer une économie de consommation tout en assurant un certain niveau de QoS (acronyme des termes anglo saxons Quality Of Service) aux différents utilisateurs des passerelles comportant un point d'accès WiFi communautaire.

Selon la présente invention, le procédé de gestion d'accès à un réseau WiFi communautaire comprenant un serveur, une base de données et des passerelles équipées de points d'accès au réseau, comprend les étapes consistant :
- à réception par le serveur d'une requête provenant d'une première passerelle suite à une demande de connexion reçue par cette passerelle, cette passerelle ayant déjà atteint un nombre maximum de connexions, à chercher dans la base de données une deuxième passerelle, en sommeil, située à proximité de la première passerelle,
- à envoyer par le serveur une requête de réveil avec une demande d'activation du WiFi communautaire à une deuxième passerelle en sommeil et
- à répondre par le serveur à la requête de la première passerelle en lui indiquant de refuser la demande de connexion, suite à la réception d'un acquittement provenant de la deuxième passerelle.

Selon un mode particulier de réalisation, le procédé est tel que, si la recherche ne fournit pas de deuxième passerelle, le serveur indique à la première passerelle qu'elle doit accepter la demande de connexion. Ce mode permet d'autoriser un nombre de connexions par la passerelle supérieur à sa limite maximale mais au détriment de la QoS. Ce mode peut être qualifié de mode de fonctionnement dégradé de la passerelle. L'avantage est qu'un nouvel utilisateur peut initialiser une connexion et communiquer même si la passerelle a déjà atteint son nombre maximum de connexions.

En outre, l'invention a pour objet un serveur destiné à un réseau WiFi communautaire comprenant une base de données des passerelles équipées de points d'accès au réseau. Le serveur est adapté pour :
- chercher dans la base de données, à réception d'une requête provenant d'une première passerelle, suite à une demande de connexion reçue par la première passerelle, la première passerelle ayant déjà atteint un nombre maximum de connexion, une deuxième passerelle, en sommeil, située à proximité de la première passerelle,
- envoyer, à la deuxième passerelle trouvée, une requête de réveil avec une demande d'activation du WiFi communautaire et
- répondre, suite à la réception d'un acquittement provenant de la deuxième passerelle, à la requête de la première passerelle en lui indiquant de refuser la demande de connexion.

En outre, l'invention a pour objet une passerelle équipée d'un point d'accès WiFi, destinée à un réseau WiFi communautaire identifié par un nom comprenant un serveur et une base de données des passerelles équipées de points d'accès au réseau. La passerelle est adaptée pour :
- à réception d'une requête de connexion qui inclut le nom du réseau WiFi communautaire, comparer un nombre de connexions déjà établies avec la passerelle avec un nombre maximal déterminé de connexions,
- si le nombre de connexions déjà établies est égal au nombre maximal alors émettre à destination du serveur une requête comprenant une identification de la passerelle,
- à réception d'une réponse du serveur indiquant à la passerelle de refuser la connexion, répondre par un refus à la requête de connexion de la station.

### Liste des figures

D'autres caractéristiques et avantages de l'invention apparaîtront lors de la description qui suit faite en regard de la figure annexée donnée à titre d'exemple non limitatif.

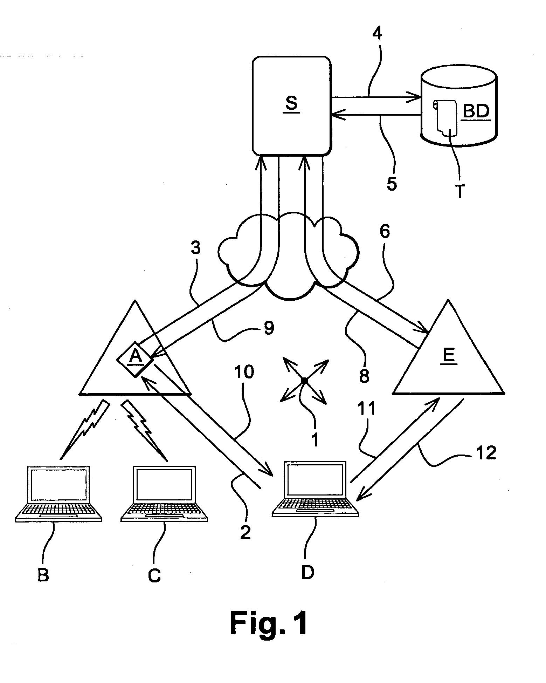

La figure 1 est un schéma illustrant une mise en oeuvre d'un service WiFi communautaire selon un mode de réalisation particulier de l'invention.

### Description d'un mode de réalisation de l'invention

La figure 1 est un schéma d'une mise en oeuvre particulière par un réseau WiFi communautaire d'un procédé 1 selon l'invention. La mise en oeuvre correspond à un déploiement avec des passerelles domestiques, c'est-à-dire déployée dans un cadre privé et généralement familial.

Le réseau WiFi communautaire comprend un serveur, une base de données et des passerelles domestiques équipées de points d'accès au réseau pour offrir un service WiFi communautaire. Le serveur et les passerelles sont adaptés pour une mise en oeuvre du procédé selon l'invention. La base de données comprend une table T listant des passerelles domestiques affiliées au réseau communautaire, c'est-à-dire adaptées pour une mise en oeuvre du procédé selon l'invention.

Selon l'illustration, le point d'accès au réseau WiFi communautaire est hébergé par une passerelle domestique A qui héberge en outre un point d'accès au réseau domestique. Ainsi, la passerelle A donne l'accès à des stations B, C, D au réseau domestique et/ou au réseau WiFi communautaire. Les stations B, C, D appartiennent à un ou plusieurs utilisateurs. La passerelle diffuse régulièrement des balises (« Beacon ») qui contiennent le nom SSID du réseau radio associé à un point d'accès.

On entend par station tout dispositif apte à communiquer avec un point d'accès WiFi, tel un ordinateur portable, un dispositif du type PDA (pour « Personnal Digital Assistant »), un Smart Phone, etc.

Pour connecter une station B , C d'un utilisateur au réseau domestique, il est connu des protocoles d'authentification et de chiffrement de données pour la sécurité et le contrôle d'accès tels que les protocoles WPA - PSK et WPA₂- PSK (« Wifi Protection Acces » selon la terminologie anglosaxonne).

Pour accéder au réseau domestique avec une station disposant d'une liaison radio compatible WiFi, tel un ordinateur portable, un utilisateur saisit dans sa station B, C les paramètres d'identification du réseau. En particulier, il saisit ou sélectionne le nom du réseau domestique ainsi qu'une clé d'accès au réseau domestique, telle qu'une clé d'accès WEP (« Wired Equivalent Privacy » selon la terminologie anglo saxonne) ou WPA.

Pour accéder au réseau WiFi communautaire avec une station disposant d'une liaison radio compatible WiFi, un utilisateur saisit ou sélectionne dans sa station D le nom, SSID_Com, du réseau WiFi communautaire.

La station émet 2 une requête de connexion qui inclut le nom, SSID_Com, du réseau WiFi communautaire, cette requête correspond à une trame « probe request ».

La passerelle A est paramétrée avec un nombre maximum de connexions fixé de manière à garantir une QoS donnée compte tenu de la bande passante de la passerelle, par exemple avec une bande passante de 100Mbits et 3Mbits/connexion ceci donne 33 connexions maximum. Selon un mode de réalisation, le nombre maximum de connexions associées est typiquement mémorisé dans une mémoire de la passerelle.

La passerelle A consulte ce paramètre et le compare à la valeur d'un compteur qui compte le nombre de connexions établies avec la passerelle pour déterminer si elle peut accepter la requête de connexion de la station D avec le débit requis.

Si le compteur a atteint la valeur du paramètre du fait des connexions existantes des stations B et C, c'est-à-dire si le nombre de connexions déjà établies atteint le nombre maximum fixé par le paramètre alors la passerelle émet 3 une requête comprenant une information d'identification, par exemple son adresse MAC, via une connexion internet donc typiquement sous un format http, à destination du serveur S.

A réception de cette requête, le serveur S interroge 4 la table T des passerelles mémorisée dans la base de données BD. L'interrogation porte sur la détermination des passerelles proches de la passerelle A. La proximité est géographique. La localisation géographique des passerelles peut être connue par tout moyen : GPS, adresse associée à une facturation, etc. Le serveur S compare l'information de localisation de la passerelle A contenue dans la table T avec les informations de localisation des autres passerelles de la table T obtenues 5 en retour de l'interrogation de la base de données BD. Lorsque l'information de localisation de la passerelle A appartient à une zone de voisinage d'une passerelle listée dans la table T, le serveur S vérifie si cette passerelle est en sommeil. Si elle est bien en sommeil, le serveur inscrit cette passerelle dans une liste. La zone de voisinage d'une passerelle correspond typiquement à la couverture radio du point d'accès WiFi communautaire de la passerelle. Cette zone peut être définie par un ensemble de coordonnées de longitudes et de latitudes qui définissent une surface.

Le résultat de l'interrogation est une liste des passerelles en état de sommeil proches de la passerelle A.

Si la liste n'est pas vide, le serveur sélectionne la passerelle E la plus proche ou la première sur la liste et lui envoi 6 une requête de réveil pour mettre sous tension son module radio et par conséquent activer le point d'accès WiFi communautaire associé à cette passerelle. Cette requête est réalisée via une connexion internet donc typiquement sous un format http.

A réception de l'acquittement 8 indiquant le bon déroulement de la sortie du sommeil de la passerelle E, le serveur répond 9 à la passerelle A de refuser la demande de connexion de la station D puisqu'une passerelle proche a été réveillée dans une zone de voisinage.

La passerelle A refuse la connexion avec la station en émettant 10 une trame « probe response ».

Au renouvellement de sa demande de connexion 11, nouvelle trame « probe request », la station D reçoit 12 alors une réponse d'accord « probe response » de la passerelle E pour une connexion avec son point d'accès WiFi communautaire caractérisé par le même SSID, SSID_Com que le point d'accès WiFi communautaire de la passerelle A.

Après connexion, le procédé comporte éventuellement une étape d'authentification au cours de laquelle les deux entités s'identifient mutuellement.

Après cette première étape de demande de connexion, la station D émet classiquement une requête d'association « association request » qui comprend son adresse MAC.

Selon une implémentation préférée, les étapes du procédé 1 de gestion d'accès à un réseau WiFi communautaire selon l'invention sont déterminées par les instructions d'un programme typiquement découpé en deux modules incorporés respectivement dans deux circuits électroniques telles deux puce elles-mêmes pouvant être disposées dans deux dispositifs électroniques tels un serveur et une passerelle. Le procédé de gestion d'accès à un réseau WiFi communautaire, selon l'invention peut tout aussi bien être mis en oeuvre lorsque ce programme (ou ses modules) est chargé dans un organe de calcul tel un processeur ou équivalent dont le fonctionnement est alors commandé par l'exécution du programme.

En conséquence, l'invention s'applique également à un programme d'ordinateur (ou ses différents modules), notamment un programme d'ordinateur sur ou dans un support d'informations, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter un procédé selon l'invention.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

Alternativement, le support d'informations peut être un circuit intégré dans lequel le programme est incorporé, le circuit étant adapté pour exécuter ou pour être utilisé dans l'exécution du procédé en question.

D'autre part, le programme peut être traduit en une forme transmissible telle qu'un signal électrique ou optique, qui peut être acheminé via un câble électrique ou optique, par radio ou par d'autres moyens. Le programme selon l'invention peut être en particulier téléchargé sur un réseau de type Internet.

## Revendications

1. Procédé (1) de gestion d'accès à un réseau WiFi communautaire comprenant un serveur (S), une base de données (BD) et des passerelles équipées de points d'accès (A, E) au réseau, **caractérisé en ce que** ledit procédé comprend les étapes consistant :
- à réception par le serveur (S) d'une requête (3) provenant d'une première passerelle (A) suite à une demande (2) de connexion reçue par cette passerelle, cette passerelle ayant déjà atteint un nombre maximum de connexions, à chercher dans la base de données (BD) une deuxième passerelle (E) dont le module radio est en sommeil, située à proximité de la première passerelle,
- à envoyer (6) par le serveur via une connexion internet une requête de réveil du module radio avec une demande d'activation du WiFi communautaire à une deuxième passerelle en sommeil et
- à répondre (9) par le serveur à la requête de la première passerelle (A) en lui indiquant de refuser la demande de connexion, suite à la réception d'un acquittement (8) provenant de la deuxième passerelle.

2. Procédé (1) de gestion d'accès à un réseau WiFi communautaire selon la revendication 1, selon lequel, si la recherche (4, 5) ne fournit pas de deuxième passerelle, à indiquer par le serveur (S) à la première passerelle (A) qu'elle doit accepter la demande (2) de connexion.

3. Serveur (S) destiné à un réseau WiFi communautaire comprenant une base de données (BD) des passerelles équipées de points d'accès au réseau, **caractérisé en ce qu'**il est adapté pour :
- chercher dans la base de données, à réception d'une requête (3) provenant d'une première passerelle (A), suite à une demande (2) de connexion reçue par la première passerelle, la première passerelle ayant déjà atteint un nombre maximum de connexion, une deuxième passerelle (E) dont le module radio est en sommeil, située à proximité de la première passerelle (A),
- envoyer (6) via une connexion internet, à la deuxième passerelle trouvée, une requête de réveil du module radio avec une demande d'activation du WiFi communautaire et
- répondre (9), suite à la réception d'un acquittement (8) provenant de la deuxième passerelle (E), à la requête de la première passerelle (A) en lui indiquant de refuser la demande de connexion.

4. Passerelle (A) équipée d'un point d'accès WiFi, destinée à un réseau WiFi communautaire identifié par un nom (SSID_Com) comprenant un serveur (S) et une base de données (BD) des passerelles équipées de points d'accès au réseau, **caractérisé en ce qu'**elle est adapté pour :
- à réception d'une requête (2) de connexion qui inclut le nom (SSID_Com) du réseau WiFi communautaire, comparer un nombre de connexions déjà établies avec la passerelle avec un nombre maximal déterminé de connexions,
- si le nombre de connexions déjà établies est égal au nombre maximal alors émettre (3) à destination du serveur une requête comprenant une identification de la passerelle,
- à réception d'une réponse (9) du serveur (S) indiquant à la passerelle (A) de refuser la connexion, répondre (10) par un refus à la requête de connexion de la station.

5. Programme d'ordinateur sur un support d'informations, ledit programme comportant des instructions de programme adaptées à la mise en oeuvre d'un procédé selon l'une des revendications 1 et 2 lorsque le programme est chargé et exécuté dans un serveur.

6. Support d'informations comportant des instructions de programme adaptées à la mise en oeuvre d'un procédé selon l'une des revendications 1 et 2, lorsque ledit programme est chargé et exécuté dans un serveur.

## Patentansprüche

1. Verfahren (1) zum Steuern des Zugriffs auf ein gemeinsames WiFi-Netz, das einen Server (S), eine Datenbank (BD) und Brücken, die mit Zugriffspunkten (A, E) auf das Netz ausgerüstet sind, umfasst, **dadurch gekennzeichnet, dass** das Verfahren die folgenden Schritte umfasst, die darin bestehen:
- durch den Server (S) eine Anforderung (3) von einer ersten Brücke (A) als Folge einer von dieser Brücke empfangenen Verbindungsanforderung (2) zu empfangen, wobei diese Brücke bereits eine maximale Anzahl von Verbindungen erreicht hat, und in der Datenbank (BD) eine zweite Brücke (E) zu suchen, deren Funkmodul im Ruhezustand ist und die sich in der Nähe der ersten Brücke befindet,
- durch den Server über eine Internet-Verbindung eine Anforderung zum Aufwecken des Funkmoduls zusammen mit einer Anforderung zum Aktivieren des gemeinsamen WiFi an eine zweite im Ruhezustand befindliche Brücke zu schicken (6) und
- durch den Server auf die Anforderung der ersten Brücke (A) zu antworten (9), indem dieser angezeigt wird, dass die Verbindungsanforderung verweigert wird, als Folge des Empfangs einer Quittierung (8), die von der zweiten Brücke stammt.

2. Verfahren (1) zum Steuern des Zugriffs auf ein gemeinsames WiFi-Netz nach Anspruch 1, wobei dann, wenn die Suche (4, 5) keine zweite Brücke ergibt, durch den Server (S) der ersten Brücke (A) angezeigt wird, dass sie die Verbindungsanforderung (2) akzeptieren muss.

3. Server (S), der für ein gemeinsames WiFi-Netz bestimmt ist, das eine Datenbank (BD) von Brücken, die mit Netzzugriffspunkten ausgerüstet sind, umfasst, **dadurch gekennzeichnet, dass** er dafür ausgelegt ist:
- in der Datenbank bei Empfang einer Anforderung (3), die von einer ersten Brücke (A) stammt, als Folge einer von der ersten Brücke empfangenen Verbindungsanforderung (2), wobei die erste Brücke bereits eine maximale Anzahl von Verbindungen erreicht hat, eine zweite Brücke (E) zu suchen, deren Funkmodul im Ruhezustand ist und die sich in der Nähe der ersten Brücke (A) befindet,
- über eine Internet-Verbindung zu der gefundenen zweiten Brücke eine Anforderung zum Aufwecken des Funkmoduls zusammen mit einer Anforderung zum Aktivieren des gemeinsamen WiFi zu schicken (6) und
- als Folge des Empfangs einer Quittierung (8), die von der zweiten Brücke (E) stammt, auf die Anforderung von der ersten Brücke (A) zu antworten (9), indem dieser angezeigt wird, die Verbindungsanforderung zu verweigern.

4. Brücke (A), die mit einem WiFi-Zugriffspunkt ausgerüstet ist, der für ein gemeinsames WiFi-Netz bestimmt ist, das durch einen Namen (SSID_Com) identifiziert wird und das einen Server (S) und eine Datenbank (BD) für Brücken, die mit Netzzugriffspunkten ausgerüstet sind, umfasst, **dadurch gekennzeichnet, dass** sie dafür ausgelegt ist:
- bei Empfang einer Verbindungsanforderung (2), die den Namen SSID_Com des gemeinsamen WiFi-Netzes enthält, eine Anzahl bereits aufgebauter Verbindungen mit der Brücke mit einer bestimmten maximalen Anzahl von Verbindungen zu vergleichen,
- falls die Anzahl bereits aufgebauter Verbindungen gleich einer maximalen Anzahl ist, anschließend zu dem Server eine Anforderung auszusenden (3), die eine Identifizierung der Brücke enthält,
- bei Empfang einer Antwort (9) von dem Server (S), die der Brücke (A) angibt, die Verbindung zu verweigern, durch eine Zurückweisung der Verbindungsanforderung der Station zu antworten (10).

5. Computerprogramm auf einem Datenträger, wobei das Programm Programmbefehle enthält, die dafür ausgelegt sind, ein Verfahren nach einem der Ansprüche 1 und 2 auszuführen, wenn das Programm in einen Server geladen und darin ausgeführt wird.

6. Datenträger, der Programmbefehle enthält, die dafür ausgelegt sind, ein Verfahren nach einem der Ansprüche 1 und 2 auszuführen, wenn das Programm in einen Server geladen und darin ausgeführt wird.

## Claims

1. Method (1) for managing access to a community WiFi network comprising a server (S), a database (BD) and gateways equipped with access points (A,E) to the network, **characterized in that** said method comprises the steps consisting:
- in receiving by the server (S) a request (3) originating from a first gateway (A) following a connection request (2) received by this gateway, this gateway having already reached a maximum number of connections, in searching in the database (BD) for a second gateway (E), the radio module of which is in sleep mode, situated close to the first gateway,
- in sending (6) by the server via an internet connection a request to wake up the radio module with a demand for activating the community WiFi to a second gateway in sleep mode and
- in replying (9) by the server to the request from the first gateway (A) by indicating to it to refuse the connection request, following receipt of an acknowledgement (8) originating from the second gateway.

2. Method (1) for managing access to a community WiFi network according to Claim 1, according to which, if the search (4, 5) does not provide a second gateway, to indicate by the server (S) to the first gateway (A) that it must accept the connection request (2).

3. Server(S) intended for a community WiFi network comprising a database (BD) of the gateways equipped with network access points, **characterized in that** it is adapted for:
- searching in the database, on receiving a request (3) originating from a first gateway (A), following a connection request (2) received by the first gateway, the first gateway having already reached a maximum number of connections, for a second gateway (E) the radio module of which is in sleep mode, situated close to the first gateway (A),
- sending (6) via an internet connection, to the second gateway found, a request for the radio module to be awakened with a demand for activating the community WiFi and
- replying (9), following receipt of an acknowledgement (8) originating from the second gateway (E), to the request from the first gateway (A) by indicating to it to refuse the connection request.

4. Gateway (A) equipped with a WiFi access point, intended for a community WiFi network identified by a name (SSID_Com) comprising a server (S) and a database (DB) of the gateways equipped with network access points, **characterized in that** it is adapted for:
- on receiving a connection request (2) which includes the name (SSID_Com) of the community WiFi network, comparing a number of connections already established with the gateway with a predetermined maximum number of connections,
- if the number of connections already established is equal to the maximum number then transmitting (3) to the server a request comprising an identification of the gateway,
- on receiving a reply (9) from the server (S) indicating to the gateway (A) to refuse the connection, replying (10) to the request to connect the station with a refusal.

5. Computer program on an information medium, said program containing program instructions suitable for implementing a method according to one of Claims 1 and 2 when the program is loaded and executed on a server.

6. Information medium containing program instructions suitable for implementing a method according to one of Claims 1 and 2, when said program is loaded and executed on a server.
